# EUROPEAN PATENT APPLICATION

(11) **EP 4 382 405 A1**
(43) Date of publication of application: **12.06.2024**
(21) Application number: 23214311.5
(22) Date of filing: 05.12.2023
(51) Int. Cl.: B63B 27/14, B32B 27/00, B32B 37/14

(54) **AN OFFSHORE GANGWAY, A VESSEL, AN OFFSHORE STRUCTURE, A COMPOSITE SACRIFICIAL LAYER PANEL AND A METHOD**

(30) Priority: 05.12.2022 NL 2033666
(71) Applicant: Ampelmann Holding B.V., 2629 HG Delft (NL)
(72) Inventor: FRIELING, Siebert, 2629 HG Delft (NL)
(74) Representative: V.O.

(57) **Abstract**

An offshore gangway, comprising an elongate boom unit provided with composite supporting components and configured to provide a boom walkway along a boom direction. The elongate boom unit is further provided, at an exterior facing side of at least one of the composite supporting components, with a composite sacrificial layer panel.

## Description

The invention relates to an offshore gangway, comprising a an elongate boom unit configured to provide a boom walkway along a boom direction.

Offshore gangways are generally known, e.g. as a motion compensated gangway, for transferring a load/person from a vessel to an object such as an offshore construction, or vice versa. A transfer deck bearing the elongate boom unit may be configured to be connected to a base that may be configured to be mounted on a vessel. The transfer deck may enable access onto the elongate boom unit from a vessel-fixed access point. The transfer deck may further be configured to be movable, e.g. including actuators such as hydraulic cylinders, to compensate for relative motion between the base or vessel and an object to or from which the load/person can be transferred. Said relative motion may for example result from waves or rolling, pitching and/or yawing motion of a vessel or boat floating on the water.

Further, the elongate boom unit extends in a boom direction and is configured to provide a boom walkway along the boom direction. Telescopic gangways may comprise an elongate boom unit that is telescopic typically having a tip that may be held, during operation of the offshore gangway, such as a motion compensated gangway, in close proximity of an object such as an offshore construction to or from which a load or a person has to be transferred.

A telescopic gangway comprises a first and second gangway part or element, for example a telescoping and main boom, which are telescopable with respect to each other in the main boom direction, e.g. by rolling in and out, to adjust a longitudinal length of the telescopic gangway. Within the context of this application the term telescopable is meant to be constructed as being movable, such as being able to move in and out of each other and/or with respect to each other along said main boom direction.

Motion compensated gangways per se, such as for compensating for vessel motions when transferring personnel and/or loads are known in the art. For example from the Ampelmann^{®} system as disclosed in general in NL1027103, or systems disclosed in WO2012/138227 and WO2013/10564.

Patent publication NL1027103 discloses a vessel with a Stewart type construction for compensating motions of a ship. The construction comprises a transition deck, borne on six hydraulic cylinders, and motion sensors. During use, with the aid of the sensors, the motions of the vessel are measured. With the aid of these measurements, the orientation and/or position of the cylinders is driven continuously so that the transition deck remains approximately stationary relative to the fixed world. A luffing gangway is connected to the transition deck. In this manner, motions of the vessel are compensated and for instance people or loads can be transferred from the vessel onto a stationary offshore construction, or vice versa.

During operational use of the offshore gangway, damage may occur to supporting components of the elongate boom unit, e.g. by swinging equipment, tool drops and/or hail. Then, the offshore gangway may suffer from unsafe and/or unreliable operational availability.

An object of the invention is to provide an offshore gangway that offers improved safe and reliable operational availability.

Thereto, according to an aspect of the invention, an offshore gangway is provided, comprising an elongate boom unit provided with composite supporting components and configured to provide a boom walkway along a boom direction, wherein the elongate boom unit is further provided, at an exterior facing side of at least one of the composite supporting components, with a composite sacrificial layer panel.

By applying a composite sacrificial layer panel to an exterior facing side of at least one of the composite supporting components external impacts can be received without serious damage to the at least one of the composite supporting components. The composite sacrificial layer panel serves as a sacrificial layer counteracting deteriorating functionality of the at least one of the composite supporting components, e.g. in terms of rigidity or bearing capacity requirements, thereby improving safe and reliable operational availability of the offshore gangway.

Further, by providing the elongate boom unit with composite supporting components, a relatively lightweight structure may be obtained over steel constructions, thereby enabling fast moving functionality and/or reduced actuator power requirements and/or reduced power consumption. The use of composite materials, e.g. as a laminate structure, in the elongate boom unit, also has the advantage that corrosion is counteracted, thereby potentially reducing maintenance costs compared to steel structures. Any inherent lower resistance of laminate structures to external impact loads, compared to steel, may be compensated by the application of the sacrificial layer at least partially absorbing external impact loads.

Moreover, a damaged composite sacrificial layer panel can be easily replaced, if desired, also by personnel having limited skills in forming composite materials. In principle, no re-certification of the composite component is required, thereby reducing downtime of a damaged gangway.

In principle, multiple composite sacrificial layer panels may be applied to protect corresponding external areas of composite supporting components.

Preferably, composite sacrificial layer panels are applied on areas of the elongate boom unit that are prone to external impact and critical for damage.

Preferably, the composite sacrificial layer panel comprises a fiber reinforced polymer skin layer and a core sandwiched between the skin layer and the exterior facing side of the at least one composite supporting component. The core may contain core material such as foam core material or honeycomb core material. Upon the occurrence of an external impact load on the composite sacrificial layer panel, the damaging impact energy may at least partly be absorbed by the panel. The composite sacrificial layer panel may be formed or may include a composite sandwich layer panel.

The damage absorbing process may include the following. A point load of the external impact may be distributed by the fiber reinforced polymer skin layer to a larger area and the impact energy is at last partly absorbed by local delamination of the outer skin layer. Any remaining impact energy may be absorbed by compression of the core, e.g. a foam core or a honeycomb core. Further, a shock wave resulting from the external impact may reduce while it travels through the panel and once it reaches the composite supporting component of the elongate boom unit it is reduced such that it does not cause any serious damage to the composite supporting component.

The invention also relates to a vessel provided with an offshore gangway.

Further, the invention relates to an offshore structure provided with an offshore gangway.

In addition, the invention relates to a composite sacrificial layer panel.

Also, the invention relates to a method of preparing an offshore gangway.

The invention will be further elucidated on the basis of exemplary embodiments which are represented in the drawings. The exemplary embodiments are given by way of non-limitative illustration of the invention. In the drawings:
Fig. 1 shows a schematic perspective view of a vessel having an offshore gangway according to the invention;
Fig. 2A shows a schematic cross sectional side view of a composite supporting component of the offshore gangway shown in Fig. 1, wherein a composite sacrificial layer panel is mounted on said composite supporting component;
Fig. 2B shows a schematic cross sectional side view of the composite supporting component shown in Fig. 2A, wherein the composite sacrificial layer panel is in a damaged state;
Fig. 2C shows a schematic cross sectional side view of the composite supporting component shown in Fig. 2B, wherein the damaged composite sacrificial layer panel has been removed;
Fig. 2D shows a schematic cross sectional side view of the composite supporting component shown in Fig. 2C, wherein another composite sacrificial layer panel has been mounted on the composite supporting component;
Fig. 3 shows a schematic view of an offshore construction having an offshore gangway according to the invention, and
Fig. 4 shows a scheme of a method according to the invention.

In the figures identical or corresponding parts are represented with the same reference numerals. The drawings are only schematic representations of embodiments of the invention, which are given by manner of non-limited examples.

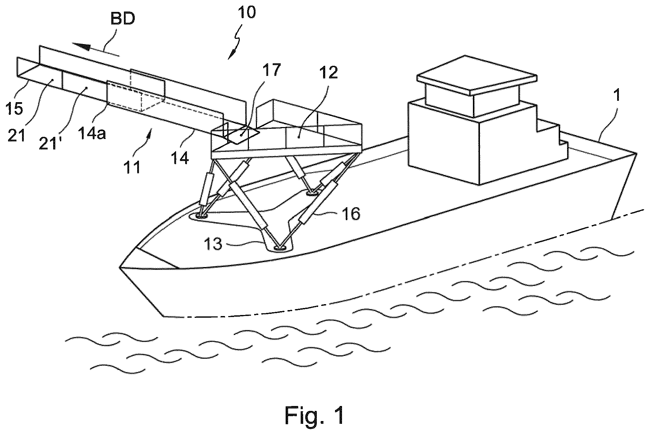

Fig. 1 shows a schematic perspective view of a vessel 1 having an offshore gangway 10 according to the invention. The offshore gangway 10 comprises an elongate boom unit 11 and a transfer deck 12 connected to a base 13 carrying the transfer deck 12. The base 13 is firmly mounted to the vessel 1. The elongate boom unit 11 is configured to provide a boom walkway such as a walkboard or walkplank, to facilitate transfer of persons and/or goods along the elongate boom unit 11, e.g. towards or from another vessel or structure such as an offshore structure. The transfer deck 12 bears the elongate boom unit 11 and enables access to said elongate boom unit 11.

In the shown embodiment, the elongate boom unit 11 is telescopable along the boom direction BD. Here, the elongate boom unit 11 has a first boom element 14 which is connected to the transfer deck 12, and a second boom element 15 which is slidably connected to the first boom element 14, in particular slidable along the boom direction BD to extend beyond a distal end 14a of the first boom element 14. In principle, the elongate boom unit 11 can be implemented in another way, e.g. such that the first boom element 14 and the second boom element 15 are movable relative to each in another way, e.g. including a rotating movement. Further, the elongate boom unit 11 may include further boom elements, e.g. three boom element or only a single boom element.

The offshore gangway 10 comprises an actuator mechanism 16 arranged for moving the transfer deck 12 relative to the base 13. The actuator mechanism 16 may be implemented in various ways, e.g. including a Steward type construction or another mechanism enabling a relative movement in a multiple number of degrees Alternatively, the transfer deck 12 is rigidly connected to the base 13. Further, the offshore gangway 10 comprises an actuator unit 17 for moving the elongate boom unit 11 relative to the transfer deck 12, e.g. for tilting the elongate boom unit 11 around a mainly horizontal tilting axis A. Alternatively, the elongate boom unit 11 may be rigidly connected to the transfer deck 12.

Optionally, the actuator mechanism 16 and/or the actuator unit 17 is configured to perform, at least contribute to, motion compensation for the elongate boom unit 11. Then, with the aid of sensors, motions of the vessel 1 can be measured. With the aid of these measurements, during use of the vessel, the orientation and/or position of the transfer deck 12 and/or the elongate boom unit 11 can remain approximately stationary relative to the fixed world, viz. by continuously and controllably driving the actuator mechanism 16 and/or the actuator unit 17. In this manner, motions of the vessel 1 may be at least partly be compensated and for instance people or loads can e.g. be transferred from the vessel 1 onto a stationary offshore construction, or from a stationary offshore construction to the vessel 1.

According to an aspect of the invention, the elongate boom unit 11 is provided with composite supporting components 21, 21', and , at an exterior facing side of at least one of the composite supporting components 21, 21', with a composite sandwich layer panel 22.

Generally, the elongate boom unit 11 includes composite supporting components 21, 21' providing a supporting structure having sufficient rigidity for performing functionality during operational use.

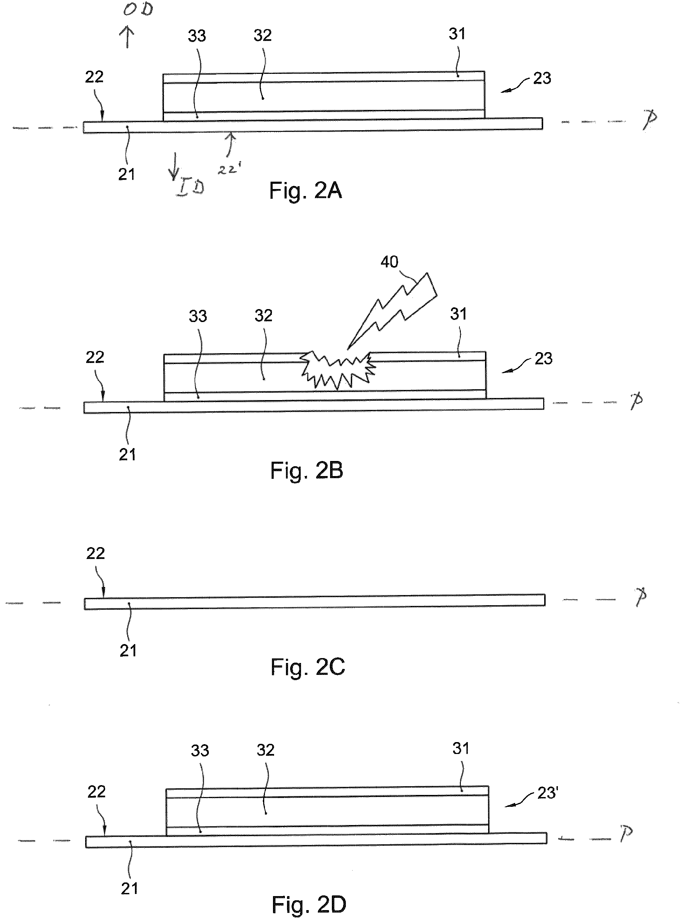

Figure 2A shows a schematic cross sectional side view of a composite supporting component 21 of the offshore gangway 11 shown in Fig. 1. The composite supporting component 21 has an exterior facing side 22 that faces from the elongate boom unit 11 outwardly. As shown in Fig. 2A, a composite sacrificial layer panel 23 is mounted on the exterior facing side 22 of the composite supporting component 21.

Generally, the composite supporting component 21 is plate-shaped extending in a mainly flat plane P. The exterior facing side 22 extends mainly parallel to the mainly flat plane P and faces away from said plane P outwardly in an outward direction OD. The composite supporting component 21 also has a an inward facing side 22', opposite to the exterior facing side 22, also extending mainly parallel to the mainly flat plane P but facing away from said plane P inwardly in an inward direction ID, opposite to the outward direction OD. The composite sacrificial is mounted on said exterior facing side 22, such that said composite sacrificial layer panel 23 is placed on top of the composite supporting component 21. The composite supporting component 21 and the composite sacrificial layer panel 23 form, at least locally, a stack of layers as shown in Fig. 2A. By at least partly covering the composite supporting component 21, the composite sacrificial layer panel 23 provides a sacrificial barrier protecting said composite supporting component 21.

The composite sacrificial layer panel 23 has a fiber reinforced polymer skin layer 31, a foam or honeycomb core 32 sandwiched between the skin layer 31 and the composite supporting component 21, and an adhesive layer 33 located between the foam core 32 and the composite supporting component 21, for bonding the foam core 32 to said composite supporting component 21.

The fiber reinforced polymer skin layer 31 may be formed as a glass fiber reinforced polymer layer providing a top layer to the panel 23. In principle, the polymer skin layer 31 may include other fibers, e.g. carbon fibers, aramid fibers and/or olefin fibers. Olefin fibers may include synthetic fibers made from a polyolefin such as polypropylene or polyethylene. The polymer may e.g. include an epoxy, vinyl ester or polyester thermosetting plastic.

In the shown embodiment, the skin layer 31 is infused to the foam core 32 with an epoxy resin.

The foam core 32 may include foam material, e.g. polyethylene Terephthalate PET or another foam or honeycomb material.

The composite sacrificial layer panel 23 serves as a sacrificial layer to protect the composite supporting component 21 to external impacts so as to ensure a safe and reliable operation of the offshore gangway 11.

The composite supporting component 21 itself is formed from a composite structural laminate material realizing a significantly lighter overall construction compared to a traditional steel structure leading to lower power consumption of the offshore gangway, during operational use, thus enabling higher vessel speeds for example.

Figure 2B shows a schematic cross sectional side view of the composite supporting component 21 shown in Fig. 2A, wherein the composite sacrificial layer panel 23 is in a damaged state. Due to an external impact load 40 damage has occurred to the skin layer 31 and the foam core 32.

Fig. 2C shows a schematic cross sectional side view of the composite supporting component 21 shown in Fig. 2B, wherein the damaged composite sacrificial layer panel 23 has been removed.

Fig. 2D shows a schematic cross sectional side view of the composite supporting component 21 shown in Fig. 2C, wherein another composite sacrificial layer panel 23' has been mounted on the composite supporting component 21. Here, the original, damaged composite sacrificial panel 23 has been replaced by another composite sacrificial panel 23'.

According to an aspect of the invention, a composite supporting component 21 can be provided with a multiple number of composite sacrificial layer panels 23. Further, multiple composite supporting component of the elongate boom unit 11 may be provided, at their exterior facing side, with composite sacrificial layer panels 23. The panels 23 can be located next to each other in an array, e.g. in a one-dimensional array or two-dimensional array. As an example, the panels 23 may adjoin each other, or may be located with intermediate spaces therebetween.

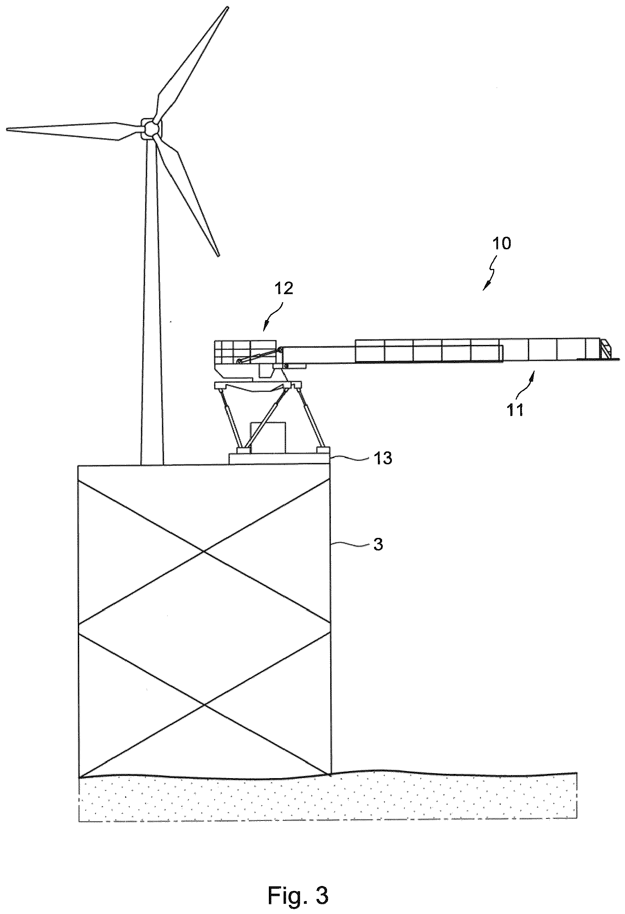

Figure 3 shows a schematic view of an offshore construction 3 having an offshore gangway 10 according to the invention. The offshore gangway 10 is provided with a transfer deck 12 mounted on a base 13 of the offshore construction 3, and an elongate boom unit 11 as described above. The transfer deck 12 may be arranged to be rotatable around a mainly vertical axis relative to the base 13. Similar to the offshore gangway 10 shown in Fig. 1, composite supporting component 21 of the elongate boom unit 11 are provided, at exterior facing sides of at least one of the composite supporting components 21, with composite sacrificial layer panels 23.

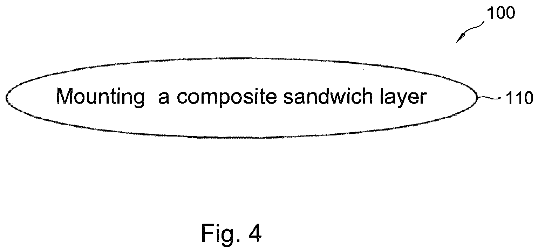

Figure 4 shows a scheme of a method 100 according to the invention. The method 100 is used for preparing an offshore gangway for operational use, and comprises a step of mounting 110 a composite sacrificial layer panel to an exterior facing side of at least one of the composite supporting components of the elongate boom unit. The mounting step can be performed during a process of manufacturing the offshore gangway or after damage has occurred. In the latter case, the mounting step may be preceded by a step of removing a damaged composite sacrificial layer panel from the exterior facing side of the at least one of the composite supporting components.

Various variations are possible. It will be clear to the skilled person that the invention is not limited to the exemplary embodiment represented here. Many variations are possible.

Such variations shall be clear to the skilled person and are considered to fall within the scope of the invention as defined in the appended claims.

## Claims

1. An offshore gangway, comprising an elongate boom unit provided with composite supporting components and configured to provide a boom walkway along a boom direction, wherein the elongate boom unit is further provided, at an exterior facing side of at least one of the composite supporting components, with a composite sacrificial layer panel,
wherein the composite sacrificial layer panel comprises a foam or honeycomb core and
wherein the composite sacrificial layer panel comprises a fiber reinforced polymer skin layer, in particular a glass fiber, carbon fiber, aramid fiber and/or olefin fiber reinforced polymer skin layer, the foam or honeycomb core being sandwiched between the skin layer and the exterior facing side of the at least one composite supporting component.

2. An offshore gangway according to claim 1, wherein the skin layer is infused to the foam core with an epoxy resin.

3. An offshore gangway according to any of the preceding claims, further including an adhesive layer between the composite sacrificial layer panel and the exterior facing side of the at least one composite supporting component.

4. An offshore gangway according to any of the preceding claims, wherein the at least one composite supporting component includes a composite sandwich layer.

5. An offshore gangway according to any of the preceding claims, wherein the elongate boom unit is telescopable along the boom direction, the elongate boom unit in particular comprising a first boom element which is connected to a transfer deck, and a second boom element which is slidably connected to the first boom element, in particular slidable along the boom direction to extend beyond a distal end of the first boom element.

6. An offshore gangway according to any of the preceding claims, comprising a transfer deck bearing the elongate boom unit, and an actuator unit for moving the elongate boom unit relative to the transfer deck.

7. An offshore gangway according to claim 6, further comprising a base to be mounted to a vessel or offshore structure, the base carrying the transfer deck, and an actuator mechanism arranged for moving the transfer deck relative to the base.

8. An offshore gangway according to any of the preceding claims, wherein the actuator mechanism and/or the actuator unit is configured to perform, at least contribute to, motion compensation for the elongate boom unit with respect to the transfer deck and/or the base.

9. An offshore gangway according to any of the preceding claims, wherein the composite sacrificial layer panel is placed on top of the at least one composite supporting component.

10. A vessel, comprising an offshore gangway according to any one of the preceding claims 1-9.

11. An offshore structure, comprising an offshore gangway according to any one of claims 1-9.

12. A composite sacrificial layer panel for mounting to an exterior facing side of at least one of the composite supporting components of the elongate boom unit of an offshore gangway according to any one of the preceding claims 1-9.

13. A method of preparing an offshore gangway according to claim 1 for operational use, comprising a step of mounting a composite sacrificial layer panel to an exterior facing side of the at least one of the composite supporting components of the elongate boom unit.

14. A method according to claim 13, wherein the mounting step is preceded by a step of removing a damaged composite sacrificial layer panel from the exterior facing side of the at least one of the composite supporting components.
